# EUROPÄISCHE PATENTSCHRIFT

(11) **EP 0 625 399 B1**
(45) Veröffentlichungstag und Bekanntmachung des Hinweises auf die Patenterteilung: **09.09.1998**
(21) Anmeldenummer: 94107277.9
(22) Anmeldetag: 10.05.1994
(51) Int. Cl.: B23F 19/00, B23Q 27/00

(54) **Schlagmesserfräsmaschine für die Erzeugung von Hinterlegungen an den Zahnflanken von Schiebemuffen und Rasttaschen an Schiebemuffen**
Fly-cutter milling machine for making undercuts and pockets in teeth of gear shift sleeves
Machine à fraise pivotante pour la fabrication des parties chaufreinées et des poches dans la denture intérieure d'un synchroniseur

(30) Priorität: 12.05.1993 DE 4315862
(43) Veröffentlichungstag der Anmeldung: 23.11.1994
(73) Patentinhaber: Präwema Antriebstechnik GmbH, 37269 Eschwege (DE)
(72) Erfinder: Kulle, Walter, D-37269 Eschwege (DE)
(74) Vertreter: Cohausz & Florack Patentanwälte

(56) Entgegenhaltungen:
- DE-C- 4 117 365
- DE-C- 4 200 418
- GB-A- 2 013 539

## Beschreibung

Die Erfindung betrifft eine Schlagmesserfräsmaschine für die Erzeugung von Hinterlegungen an den Zahnflanken von Schiebemuffen für Schaltgetriebe und von Rasttaschen an den Schiebemuffen.

Solche Schiebemuffen werden in synchronisierten Schaltgetrieben von Kraftfahrzeugen eingesetzt, wobei die sogenannte Hinterlegung in Form einer Vertiefung an mindestens einer Flanke eines jeden Zahns der Schiebemuffe vorgesehen ist. Diese Hinterlegungen haben den Zweck, die mit ihrer Verzahnung mit der Verzahnung eines Zahnrades des Schaltgetriebes in Eingriff gebrachte Schiebemuffe vor einem ungewollten Außereingriffgeraten zu sichern.

Bei einer bekannten Schlagmesserfräsmaschine (DE-C 42 00 418) wird das Schlagmesser auf der Bahn einer Hypozykloiden vom Kopf des Zahns zu dessen Fuß bewegt, wo es ausläuft. Die an der Stirnseite des Messers angeordnete Schneide hat das Profil der zu erzeugenden Hinterlegung, so daß nach mehrmaligem Umlauf die Zahnflanke die gewünschte Kontur hat. Da die Bewegungsbahn des Schlagmessers in bezug auf die Verzahnung eine offene Hypozykloide beschreibt, werden nacheinander alle Zahnflanken an jeweils einer Seite eines jeden Zahns bearbeitet. Es versteht sich, daß dabei eine Zustellung über das Drehzahlverhältnis von Werkstückhalter und Werkzeughalter (Phasenverschiebung) zu erfolgen hat.

An Schiebemuffen für synchronisierte Schaltgetriebe von Kraftfahrzeugen sind aber nicht nur Hinterlegungen, sondern auch Rasttaschen zu erzeugen. Diese Rasttaschen dienen dazu, daß in der Nullstellung der Schiebemuffe im Schaltgetriebe die Schiebemuffe durch in die Rasttasche einrastende Druckstücke gesteuert wird. Um solche Rasttaschen an Schiebemuffen zu erzeugen, gibt es spezielle Schlagmesserfräsmaschinen (DE-C 41 17 365) mit einem Werkstückhalter für die Schiebemuffen, mit denen die Schiebemuffen in Drehung versetzt werden können, und einem Werkzeughalter, der das Schlagmesser in Drehung versetzt. In einer solchen Maschine beschreibt das Schlagmesser eine mehrteilige geschlossene Hypozykloide in bezug auf die Schiebemuffe.

Diese Art der Erzeugung von Rasttaschen und Hinterlegungen an Schiebemuffen ist sowohl in vorrichtungstechnischer Hinsicht aufwendig als auch zeitaufwendig, weil zwei Fräsmaschinen benötigt werden, in denen die Schiebemuffen jeweils eingespannt und für die Bearbeitung ausgerichtet werden müssen.

Der Erfindung liegt die Aufgabe zugrunde, das Erzeugen von Rasttaschen und Hinterlegungen an Schiebemuffen sowohl verfahrensmäßig als auch vorrichtungsmäßig zu vereinfachen.

Diese Aufgabe wird mit einer Schlagmesserfräsmaschine für die Erzeugung von Hinterlegungen an den Zahnflanken von Schiebemuffen von Schaltgetriebe und von Rasttaschen an den Schiebemuffen gelöst, die aus einem rotierend angetriebenen Werkstückhalter und einem rotierend angetriebenen Werkzeughalter besteht, der mit einem Schlagmesser für die Hinterlegungen und mit einem dazu axial und radial versetzt angeordneten Schlagmesser für die Rasttaschen bestückt ist und der mit seiner Rotationsachse in bezug auf die Rotationsachse des Werkstückhalters versetzbar ist, wobei die Rotationsbewegungen von Werkstückhalter und Werkzeughalter derart aufeinander abstimmbar sind, daß bei in Arbeitsstellung befindlichem Schlagmesser für die Hinterlegungen das Schlagmesser eine offene Hypozykloidenbahn beschreibt und bei in Arbeitsstellung befindlichem Schlagmesser für die Rasttaschen das Schlagmesser eine geschlossene Hypozykloide beschreibt.

Die besonderen Vorteile der Erfindung bestehen darin, daß durch die entfallende Umspannung des Werkstückes die gesamte Bearbeitungszeit für die Erzeugung von Hinterlegungen und der Rasttaschen vermindert wird, und weiter darin, daß nur eine einzige Maschine dafür erforderlich ist. Der für die verschiedenen Bearbeitungen notwendige zusätzliche Aufwand in dem anders gestalteten Werkzeughalter mit Werkzeug ist im Vergleich zu den bisher benötigten beiden speziellen Vorrichtungen für die Hinterlegungen und die Rasttaschen vernachlässigbar klein, wenn man berücksichtigt, daß in der Regel die für die Erfindung unbedingt notwendige Möglichkeit der Versetzung der Rotationsachsen und der Einstellung verschiedener Drehzahlverhältnisse in der Regel bei einer Vorrichtung zum Herstellen von Hinterlegungen ohnehin vorgesehen ist.

Im folgenden wird die Erfindung anhand einer Zeichnung näher erläutert. Im einzelnen zeigen:
- Figur 1: einen Werkstückhalter und einen Werkzeughalter der Vorrichtung zum Erzeugen von Hinterlegungen und Rasttaschen an einer Schiebemuffe in Seitenansicht und teilweise im Axialschnitt in der Einstellung für das Erzeugen von Hinterlegungen,
- Figur 2: den Werkzeughalter und den Werkstückhalter der Vorrichtung gemäß Figur 1 in Seitenansicht und teilweise im Axialschnitt in der Einstellung für das Erzeugen von Rasttaschen,
- Figur 3: die Bewegungsbahn des Werkzeuges der Vorrichtung gemäß Figur 1 beim Erzeugen von Hinterlegungen und
- Figur 4: die Bewegungsbahn des Werkzeuges gemäß Figur 2 beim Erzeugen von Rasttachen.

Ein in einer nicht näher dargestellten Maschine zum spanenden Bearbeiten von Werkstücken drehbar angetriebener Kopf 1 trägt einen Werkstückhalter 2, der mittels Spannklauen 3 eine Schiebemuffe 4 mit Innenverzahnung 5 hält.

Vor der Stirnseite des Werkstückhalters 2 ist ein Werkzeughalter 6 in der nicht dargestellten Maschine drehbar angetrieben gelagert. Der Werkstückhalter 6 ist axial in Richtung P₁ relativ zum Werkstückhalter 2 verstellbar. Darüber hinaus ist er relativ zur Drehachse D1 des Werkstückhalters 2 mit seiner Drehachse D2 in Richtung des Pfeils P₂ verstellbar.

Der Werkzeughalter 6 trägt axial und radial versetzt zwei verschiedene Werkzeuge, und zwar auf einem kleineren Umlaufkreis ein Schneidwerkzeug 7 für Hinterlegungen 8 und auf einem größeren Umlaufkreis ein Schneidwerkzeug 9 für Rasttaschen 10.

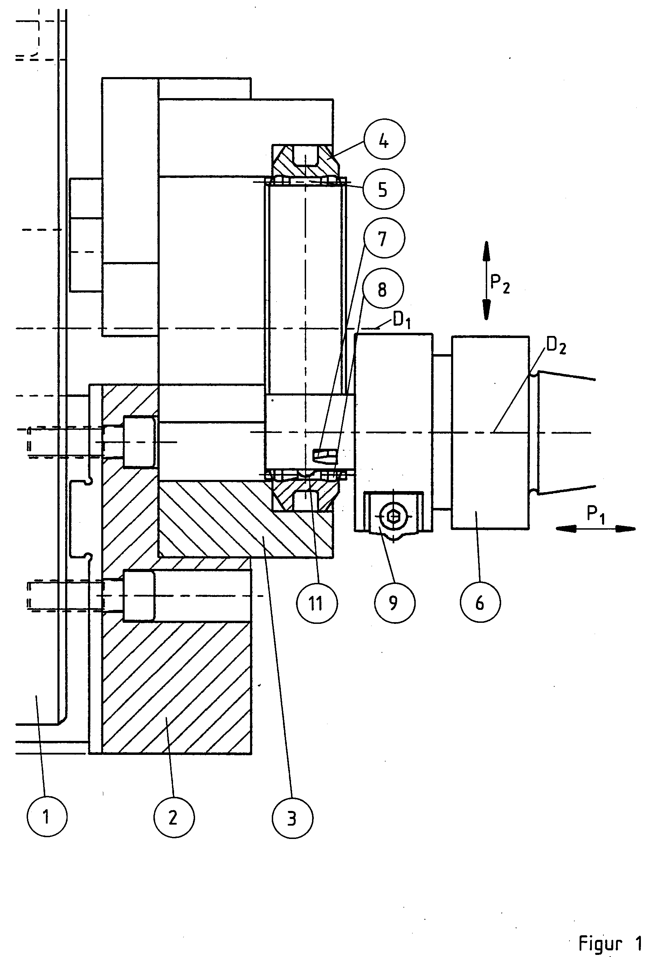

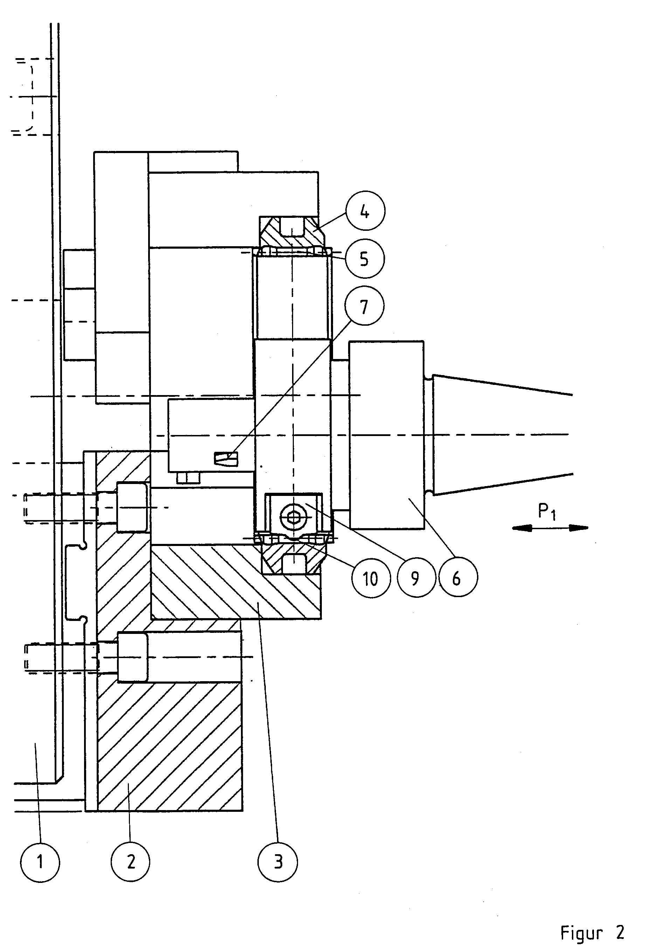

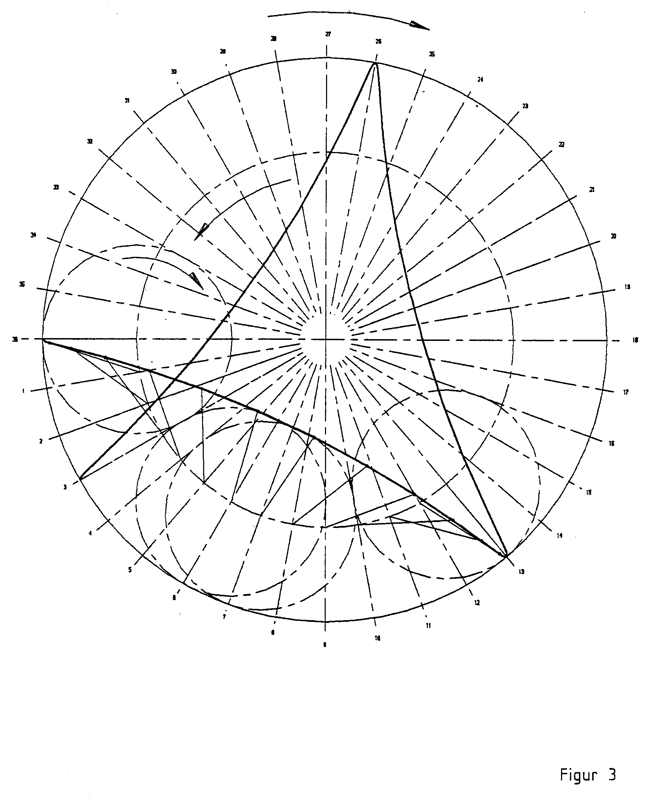

In Figur 1 befindet sich der Werkzeughalter 6 in einer Arbeitsstellung zur Erzeugung der an der rechten Seite der Schiebemuffe 4 befindlichen Hinterlegungen 8, während es sich in Figur 2 in der Arbeitsstellung zur Erzeugung der Rasttaschen 10 sich befindet. In Figur 3 ist maßstabgerecht an einem Beispiel die Bewegungsbahn des Schneidwerkzeuges 7 für Hinterlegungen 8 einer 36 Zähne aufweisenden, innenverzahnten Schiebemuffe 4 dargestellt. Das Schneidwerkzeug 7 beschreibt dabei eine offene Hypozykloide, wie an sich aus der DE 42 00 418 C1 bekannt. Die Besonderheit ist dabei, daR das Schneidwerkzeug 7 mit einem Primzahlverhältnis an der Innenverzahnung der Schiebemuffe 4 abrollt. Das heißt, daß bei dem dargestellten Ausführungsbeispiel mit 36 Zähnen das Schneidwerkzeug 7 an jedem beispielsweise 13. Zahn zum Eingriff kommt. Das führt dazu, daR nach vielen Umläufen alle Zähne bei entsprechender Zustellung gleichmäßig bearbeitet werden.

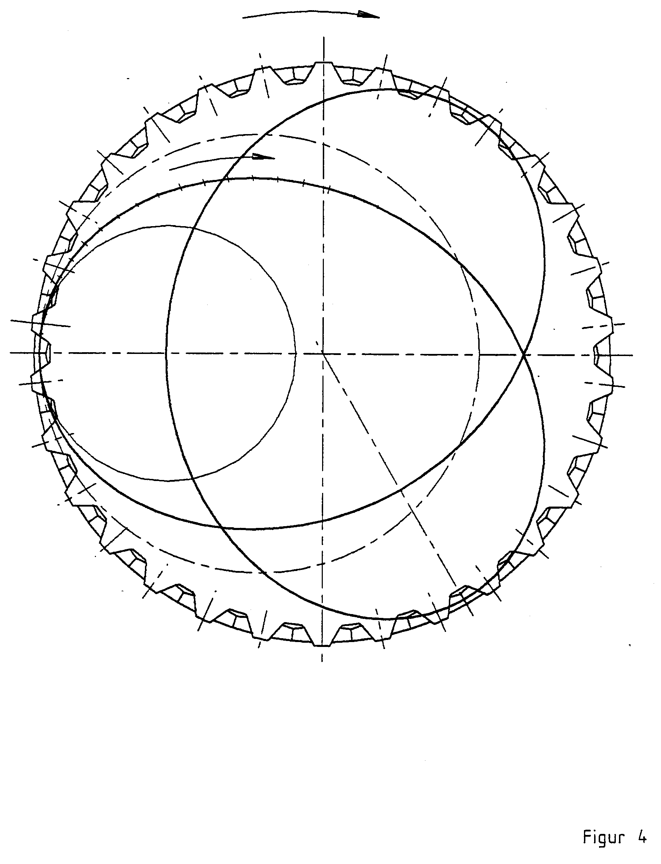

Nachdem die Hinterlegungen 8 erzeugt worden sind, erfolgt bei unverändert eingespannt gehaltener Schiebemuffe 4 eine Umstellung des Werkzeughalters 6 sowohl in axialer Richtung P₁, als auch in radialer Richtung P₂, um das Schneidwerkzeug 9 aus der in Figur 1 dargestellten Leerlaufstellung in die in Figur 2 dargestellte Arbeitsstellung zu bringen. Außer dieser Umstellung erfolgt eine weitere Umstellung bezüglich des Drehzahlverhältnisses mit dem Ergebnis, daß nicht länger die Schiebemuffe 4 bei ihrem Umlauf an mehreren jeweils verschiedenen Stellen am gesamten Umfang bearbeitet wird, sondern nur an wenigen bestimmten Stellen. In Figur 4 ist dargestellt, daß nach dieser Umstellung das Schneidwerkzeug 9 relativ zur Schiebemuffe 4 eine geschlossene Hypozykloide, im vorliegenden Fall eine dreiteilige Hypozykloide, und damit drei über den Umfang gleichmäßig verteilt angeordnete Rasttaschen 10 erzeugt.

## Patentansprüche

1. Schlagmesserfräsmaschine für die Erzeugung von Hinterlegungen (8) an den Zahnflanken von Schiebemuffen (4) für Schaltgetriebe und von Rasttaschen (10) an den Schiebemuffen (4), bestehend aus einem rotierend angetriebenen Werkstückhalter (2) und einem rotierend angetriebenen Werkzeughalter (6), der mit einem Schlagmesser (7) für die Hinterlegungen (8) und mit einem dazu axial und radial versetzt angeordneten Schlagmesser (9) für die Rasttaschen (10) bestückt ist und der mit seiner Rotationsachse (D₂) in bezug auf die Rotationsachse (D₁) des Werkstückhalters (2) versetzbar ist, wobei die Rotationsbewegungen von Werkstückhalter (2) und Werkzeughalter (6) derart aufeinander abstimmbar sind, daß bei in Arbeitsstellung befindlichem Schlagmesser (7) für die Hinterlegungen (8) das Schlagmesser (7) eine offene Hypozykloidenbahn beschreibt und bei in Arbeitsstellung befindlichem Schlagmesser (9) für die Rasttaschen (10) das Schlagmesser eine geschlossene Hypozykloide beschreibt.

## Claims

1. A fly cutter milling machine for making undercuts (8) in the tooth flanks of sliding sleeves (4) for shift transmissions and pockets (10) in the gear shift sleeves (4), comprising a rotatably driven workpiece holder (2) and a rotatably driven tool holder (6), which is equipped with a fly cutter (7) for the undercuts (8) and a fly cutter (9) for the pockets (10) which is disposed axially and radially offset in relation to the first-mentioned fly cutter and whose axis of rotation (D₂) can be offset in relation to the axis of rotation (D₁) of the workpiece holder (2), the rotary movements of the workpiece holder (2) and the tool holder (6) being so adaptable to one another that when the fly cutter (7) for the undercuts (8) is in the operational position the fly cutter (7) describes a hypocycloidal path, and when the fly cutter (9) for the pockets (10) is in the operational position the fly cutter describes a closed hypocycloid.

## Revendications

1. Machine de fraisage à couteau frappeur pour la réalisation de parties chanfreinées (8) sur des flancs de dents de manchons coulissants (4) pour des boîtes de vitesses, et de poches d'encliquetage (10) sur les manchons coulissants (4), comprenant un dispositif (2) de support de la pièce à travailler entraîné en rotation et un porte-outil (6) entraîné en rotation qui est muni d'un couteau frappeur (7) pour les parties chanfreinées (8) et d'un couteau frappeur (9) disposé de manière décalée axialement et radialement au premier couteau pour les poches d'encliquetage (10), et qui peut être décalé avec son axe de rotation (D₂) par rapport à l'axe de rotation (D₁) du dispositif (2) de support de la pièce à travailler, les mouvements de rotation du dispositif de support de la pièce à travailler (2) et du porte-outil (6) pouvant être adaptés l'un par rapport à l'autre de sorte que dans la position de travail du couteau frappeur (7) pour les parties chanfreinées (8), ce couteau frappeur (7) décrit une trajectoire hypocycloïde ouverte, et dans la position de travail du couteau frappeur (9) pour les poches d'encliquetage (10), ce couteau frappeur décrit une hypocycloïde fermée.
